# DEMANDE DE BREVET EUROPEEN

(11) **EP 1 184 260 A1**
(43) Date de publication de la demande: **06.03.2002**
(21) Numéro de dépôt: 01402172.9
(22) Date de dépôt: 14.08.2001
(51) Int. Cl.: B62D 21/11, B62D 21/15

(54) **Ensemble de structure de caisse comportant des longerons inférieurs fixés par boîtiers**

(30) Priorité: 29.08.2000 FR 0011045
(71) Demandeur: Renault, 92100 Boulogne Billancourt (FR)
(72) Inventeur: Yvetot, Marc, 75015 Paris (FR)

(57) **Abrégé**

L'invention propose un ensemble de structure de caisse de véhicule automobile qui comportant, d'avant en arrière, un élément (10) de structure de caisse formant support pour des organes du véhicule, et une cellule rigide formant habitacle du véhicule automobile, du type dans lequel l'élément (10) de structure de caisse comporte, dans un premier plan (P₁) horizontal supérieur, au moins deux longerons (14) longitudinaux supérieurs qui s'étendent vers l'avant à partir de la cellule et, dans un second plan (P₂) horizontal inférieur, au moins deux longerons longitudinaux inférieurs (22), qui s'étendent parallèlement en dessous des longerons supérieurs (14) et dont des extrémités avant (24) sont fixées à des jambes de suspension (26) fixées à des extrémités avant (16) des longerons supérieurs, caractérisé en ce que chaque longeron inférieur (22) est fixé à l'extrémité inférieure de la jambe de suspension (26) correspondante par l'intermédiaire d'un boîtier (36) qui reçoit l'extrémité avant dudit longeron inférieur (22).

## Description

L'invention concerne un ensemble de structure de caisse de véhicule automobile.

L'invention concerne plus particulièrement un ensemble de structure de caisse de véhicule automobile, du type qui comporte, d'avant en arrière, un élément de structure de caisse qui forme notamment support pour des organes mécaniques du véhicule, et une cellule rigide formant habitacle du véhicule automobile, du type dans lequel l'élément de structure de caisse comporte, dans un premier plan horizontal supérieur, au moins deux longerons longitudinaux supérieurs qui s'étendent vers l'avant à partir de la cellule et, dans un second plan horizontal inférieur, au moins un berceau moteur inférieur qui s'étend vers l'avant à partir de la cellule, et deux longerons longitudinaux inférieurs, réunis à l'avant par une traverse, qui s'étendent parallèlement en dessous des longerons supérieurs, dont des extrémités avant sont fixées à des jambes de suspension fixées aux longerons supérieurs, dont des parties intermédiaires sont liées chacune au longeron supérieur associé par au moins un tirant, et dont des extrémités arrière sont agencées avec jeu en regard d'éléments de réception du berceau moteur pour transmettre au berceau les efforts de déformation résultant d'un choc longitudinal sans déformer les longerons supérieurs.

On connaît de nombreux exemples d'ensembles de structure de caisse de ce type.

De tels ensembles, montés sur un premier véhicule, permettent, en cas de choc longitudinal avec un deuxième véhicule venant en sens inverse, d'accrocher des organes mécaniques du deuxième véhicule à l'aide des longerons inférieurs pour éviter que, au moment du choc le premier véhicule ne chevauche le deuxième véhicule ou ne pénètre le deuxième véhicule. Les longerons inférieurs, dont des extrémités avant sont liées aux jambes de suspension liées rigidement aux longerons supérieurs et dont les extrémités arrière sont enfilées avec jeu sur des éléments de réception du berceau moteur, permettent par ailleurs de décharger les longerons supérieurs des efforts de déformation résultant du choc en les dirigeant vers le berceau moteur, créant ainsi une voie de passage d'efforts vers celui-ci.

Dans de tels ensembles, les jambes de suspension peuvent avantageusement être de forme tubulaire creuse et être fixées aux longerons supérieurs par des vis. Cette solution permet d'obtenir des jambes de suspension légères et déformables.

Lors du montage, un opérateur introduit un outil de vissage à travers une ouverture inférieure de la partie tubulaire creuse des jambes de suspension pour réaliser leur fixation.

Pour cette raison, les points de fixation des longerons inférieurs doivent nécessairement être agencés à l'extérieur desdites ouvertures inférieures des jambes de suspension.

Or, il n'est pas souhaitable, pour d'évidentes considérations de résistance aux chocs, que les longerons inférieurs soient déportés transversalement par rapport aux longerons supérieurs. Une telle solution ne permettrait pas une conduction optimale des efforts résultant du choc à travers les longerons inférieurs.

Pour remédier à ces inconvénients, l'invention propose un ensemble de structure de caisse du type décrit précédemment qui permet de fixer les longerons inférieurs sous les jambes de fixation au droit des longerons supérieurs.

Dans ce but, l'invention propose un ensemble de structure de caisse du type décrit précédemment, caractérisé en ce que chaque longeron inférieur est fixé à l'extrémité inférieure de la jambe de suspension correspondante par l'intermédiaire d'un boîtier qui reçoit l'extrémité avant dudit longeron inférieur caractérisé en ce que chaque longeron inférieur est fixé à la jambe de suspension correspondante par l'intermédiaire d'un boîtier fixé à l'extrémité inférieure de la jambe de suspension.

Selon d'autres caractéristiques de l'invention :
- chaque longeron inférieur est immobilisé par rapport au boîtier par l'intermédiaire d'un élément de fixation, notamment un rivet,
   -- le boîtier comporte un corps central de part et d'autre duquel s'étendent horizontalement deux ailes de fixation à la jambe de suspension,
- les ailes du boîtier sont décalées verticalement,
- le corps du boîtier de fixation est creux, fermé à son extrémité avant, et de section transversale tubulaire extérieurement complémentaire de la section tubulaire du longeron inférieur associé, pour supporter celui-ci,
- les ailes horizontales comportent des perçages pour le passage de vis de fixation du boîtier à la jambe de suspension,
- les perçages de chaque boîtier sont distants transversalement d'une distance supérieure à l'entraxe de vis de fixation de la jambe de suspension associée sur le longeron supérieur associé,
- les perçages des ailes du boîtier sont décalés longitudinalement l'un par rapport à l'autre,
- les sections transversales des longerons inférieurs et du corps central du boîtier sont rectangulaires.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective éclatée d'un élément de structure de caisse selon l'invention,
- la figure 2 est une vue de détail en perspective d'un boîtier de fixation selon l'invention permettant la fixation du longeron inférieur à la jambe de suspension associée, et
- la figure 3 est une vue en coupe transversale à plans décalés selon la ligne 3-3 de la figure 2 du boîtier de fixation de la figure 2.

Dans la description qui va suivre, des chiffres de référence identiques désignent des pièces identiques ou ayant des fonctions similaires.

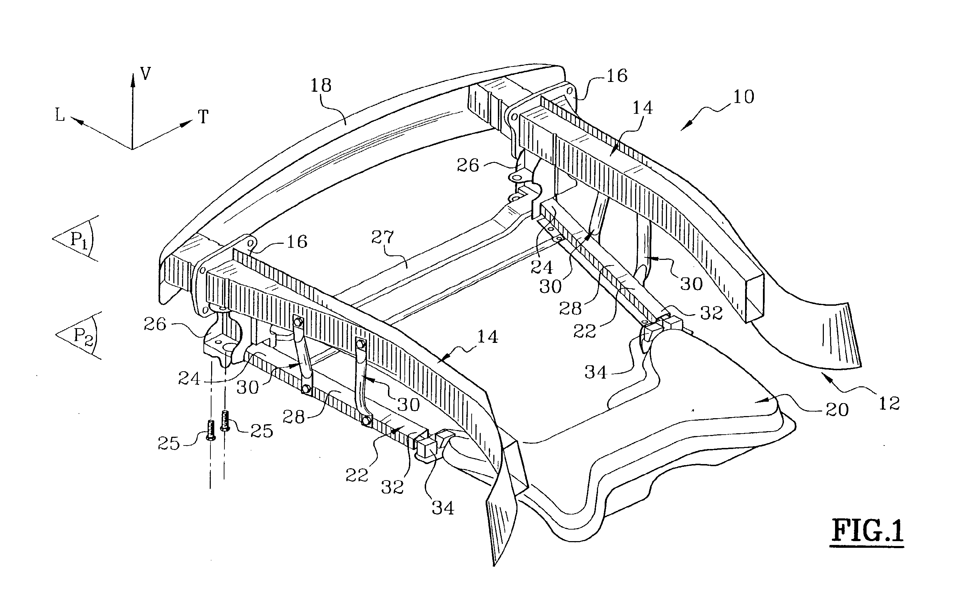

On a représenté à la figure 1, un ensemble de structure de caisse conventionnel formé d'une cellule rigide (non représentée) formant habitacle du véhicule automobile, en avant de laquelle s'étend un élément 10 de structure de caisse de direction "L" sensiblement longitudinale.

L'élément 10 de structure de caisse est par exemple soudé par point sur la cellule au niveau de son extrémité arrière 12, qui est représentée à droite de la figure 1.

L'élément 10 de structure de caisse comporte, dans un premier plan "P₁" horizontal supérieur, au moins deux longerons 14 longitudinaux supérieurs qui s'étendent vers l'avant à partir de la cellule et dont les extrémités avant 16 sont par exemple réunies par une poutre transversale 18, qui peut notamment servir de support pour un bouclier et/ou une façade avant (non représentés) du véhicule.

Dans un second plan "P₂" horizontal inférieur, l'élément 10 de structure de caisse comporte un berceau moteur inférieur 20 qui s'étend vers l'avant à partir de la cellule, et deux longerons 22 longitudinaux inférieurs qui s'étendent en dessous et parallèlement aux longerons supérieurs 14. Les longerons inférieurs 22 sont fixés, par exemple par des vis 25 de direction "V" verticale qui traversent les extrémités avant 24 des longerons inférieurs 22, à des jambes de suspension 26 qui sont fixées aux extrémités avant 16 des longerons supérieurs et qui sont notamment réunies par une traverse 27. Les parties intermédiaires 28 des longerons inférieurs 22 sont liées chacune au longeron supérieur associé 14 par au moins un tirant 30, et les extrémités arrière 32 des longerons inférieurs 22 sont agencées avec jeu en regard d'éléments 34 de réception du berceau moteur 20 pour, en cas de choc, décharger les longerons supérieurs 14 des efforts de déformation résultant du choc en les dirigeant vers le berceau moteur 20, créant ainsi une voie de passage d'efforts vers celui-ci.

L'inconvénient de cette conception est que la fixation directe des longerons inférieurs 22 sous les jambes de suspension 26, réalisée verticalement par l'intermédiaire des vis 25 qui les traversent dans leur totalité, diminue localement la résistance desdits longerons 22 aux chocs de direction longitudinale "L".

Par ailleurs, Il importe de monter les longerons inférieurs 22 rigoureusement au droit des longerons supérieurs 14. En effet, un déport transversal des longerons inférieurs 22 par rapport aux longerons supériéurs 14 ne permettrait pas une conduction optimale des efforts résultant du choc à travers les longerons inférieurs 22.

Pour remédier à ces inconvénients, chaque longeron inférieur 22 est fixé à l'extrémité inférieure de la jambe de suspension 26 correspondante par l'intermédiaire d'un boîtier 36 qui reçoit l'extrémité avant dudit longeron inférieur 22.

Cette conception permet d'une part de monter le longeron inférieur 22 rigoureusement au droit du longeron supérieur 14, et permet d'autre part de réaliser la fixation du longeron inférieur 22 sans le percer dans toute son épaisseur puisqu'il est maintenu à l'intérieur du boîtier 36.

Ainsi, avantageusement, le longeron inférieur est immobilisé par rapport au boîtier 36 par l'intermédiaire d'un élément de fixation, notamment un rivet 47 qui ne participe qu'à son immobilisation longitudinale.

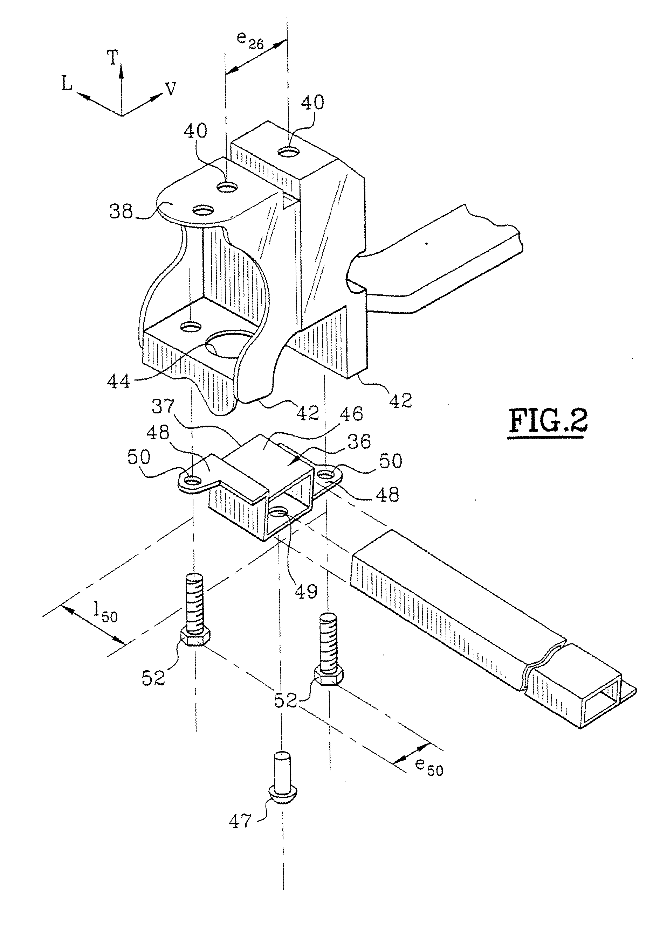

Comme l'illustre la figure 2, la jambe de suspension 26 est réalisée sous la forme d'un boîtier en tôle, de direction générale verticale "V", qui est destiné à être fixé sous le longeron supérieur 14, et qui présente sensiblement, en section suivant la direction transversale "T", la forme de deux "C" accolés dos à dos.

La jambe 26 de suspension comporte une face d'appui supérieure 38 horizontale plane, qui est formée de la réunion des deux branches supérieures des "C", et qui est destinée à être fixée sous une face inférieure horizontale plane du longeron supérieur 14 précédemment décrit.

La face supérieure 38 est percée d'au moins deux perçages 40 qui sont destinés à être traversés par des vis non représentées) pour la fixation de la jambe 26 de suspension sous le longeron supérieur associé.

Au moins une face inférieure 42 de la jambe 26 de suspension comporte au moins une lumière 44 qui est agencée au droit des perçages 40 pour permettre le passage des vis de fixation de la jambe 26 sous le longeron supérieur du bas vers le haut, et le serrage de ces vis au moyen d'un outil approprié passant par la lumière.

Le longeron inférieur 22 est reçu dans le boîtier 36 qui est lui-même fixé sous la jambe de suspension 26 par l'intermédiaire de points de fixation qui sont décalés par rapport aux lumières 44 de la jambe de suspension 26.

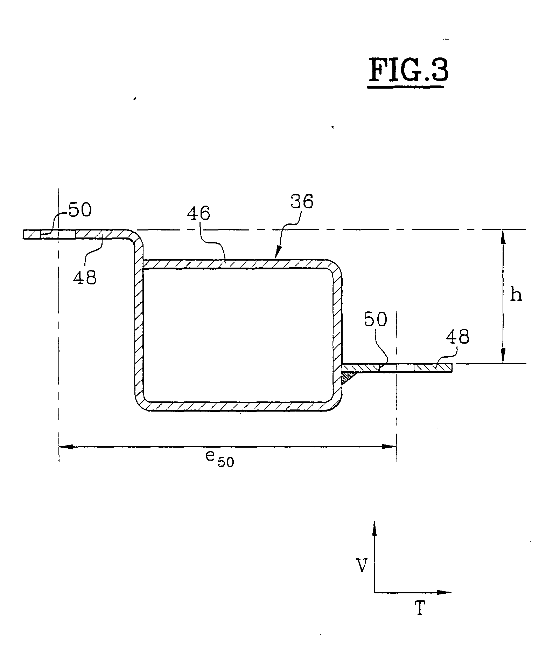

A cet effet, comme l'illustrent les figures 2 et 3, le boîtier 36 comporte un corps central 46 qui est creux, et qui fermé à son extrémité avant 37. Sa section est tubulaire, complémentaire de celle du longeron inférieur 22 de façon qu'une fois monté, le longeron inférieur 22 est reçu dans le corps 46 du boîtier 36. Le longeron inférieur 22 étant par ailleurs immobilisé longitudinalement par l'intermédiaire du rivet 47 qui traverse un perçage 49 d'une face inférieure du corps central 46 et pénètre dans le longeron inférieur 22.

Dans le mode de réalisation préféré de l'invention, le longeron inférieur 22 et le corps central 46 du boîtier 36 sont d'une section transversale rectangulaire, mais cette disposition n'est aucunement limitative de l'invention. La section pourrait notamment être une section tubulaire cylindrique.

De part et d'autre de son corps 46, le boîtier 36 comporte deux ailes 48 horizontales de fixation sous la jambe de suspension 26. Les ailes 48 sont venues de matière avec le corps 46 et s'étendent horizontalement et transversalement suivant la direction "T" à partir de celui-ci.

Les ailes horizontales 48 comportent des perçages 50 pour le passage de vis 52 de fixation du boîtier 36 à la jambe 26 de suspension. L'écartement transversal "e₅₀" suivant la direction "T" des perçages 50 des ailes 48 de chaque boîtier 36 permet de garantir un écartement des points de fixation du boîtier 36 qui est supérieur à l'entraxe "e₂₆" de vis de fixation de la jambe 26 de suspension associée sous le longeron supérieur 14 associé.

Comme l'illustrent les figures 2 et 3, dans le mode de réalisation préféré de l'invention, les ailes 48 du boîtier sont décalées verticalement suivant une hauteur "h" de façon à être reçues au contact de deux faces inférieures 42 de la jambe 26 de suspension qui sont elles aussi décalées verticalement de la même hauteur "h". Cette configuration permet d'assurer une fonction de détrompage lors d'opérations éventuelles de démontage puis de remontage du boîtier 36.

Par ailleurs, dans le mode de réalisation préféré de l'invention, les perçages 50 des ailes 48 du boîtier 36 sont décalés longitudinalement d'une distance "I₅₀" suivant la direction "L" l'un par rapport à l'autre. Cette configuration permet, en conjonction avec la grande surface d'appui que forment les ailes 48 du boîtier 36 sous les faces inférieures 42 de la jambe 26 de suspension, de garantir un appui isostatique du boîtier 36 sous la jambe de suspension 26.

Enfin, un pion de fixation rapide (non représenté) peut avantageusement être agencé sur une des ailes 48 du boîtier 36 et être reçu dans un perçage complémentaire d'une des faces inférieures 42 de fixation de la jambe de suspension 26 de façon à assurer un positionnement du boîtier 36 sous la jambe de suspension 26 avant le serrage des vis 52 de fixation.

L'invention propose ainsi une fixation rapide et résistante des longerons inférieurs 22 sous les jambes 26 de suspension.

## Revendications

1. Ensemble de structure de caisse de véhicule automobile, du type qui comporte, d'avant en arrière, un élément (10) de structure de caisse qui forme notamment support pour des organes du véhicule, et une cellule rigide formant habitacle du véhicule automobile, du type dans lequel l'élément (10) de structure de caisse comporte, dans un premier plan (P₁) horizontal supérieur, au moins deux longerons (14) longitudinaux supérieurs qui s'étendent vers l'avant à partir de la cellule et, dans un second plan (P₂) horizontal inférieur, au moins deux longerons longitudinaux inférieurs (22), qui s'étendent parallèlement en dessous des longerons supérieurs (14) et dont des extrémités avant (24) sont fixées à des jambes de suspension (26) fixées aux longerons supérieurs (14),
**caractérisé en ce que** chaque longeron inférieur (22) est fixé à l'extrémité inférieure de la jambe de suspension (26) correspondante par l'intermédiaire d'un boîtier (36) qui reçoit l'extrémité avant dudit longeron inférieur (22).

2. Ensemble selon la revendication précédente, **caractérisé en ce que** chaque longeron inférieur (22) est immobilisé par rapport au boîtier (36) par l'intermédiaire d'un élément de fixation, notamment un rivet (47).

3. Ensemble selon la revendication précédente, **caractérisé en ce que** le boîtier (36) comporte un corps central (46) de part et d'autre duquel s'étendent horizontalement deux ailes (48) de fixation à la jambe de suspension (26).

4. Ensemble selon la revendication précédente, **caractérisé en ce que** les ailes (48) du boîtier (36) sont décalées verticalement.

5. Ensemble selon l'une des revendications 2 à 4 **caractérisé en ce que** le corps (46) du boîtier de fixation est creux, fermé à son extrémité avant (37), et de section transversale tubulaire extérieurement complémentaire de la section tubulaire du longeron inférieur (22) associé, pour supporter celui-ci.

6. Ensemble selon l'une quelconque des revendications 2 à 5, **caractérisé en ce que** les ailes horizontales (48) comportent des perçages (50) pour le passage de vis (52) de fixation du boîtier (36) à la jambe de suspension (26).

7. Ensemble selon la revendication précédente, **caractérisé en ce que** les perçages (50) de chaque boîtier sont distants transversalement d'une distance (e₅₀) supérieure à l'entraxe de vis de fixation de la jambe de suspension (26) associée sur le longeron supérieur (14) associé.

8. Ensemble selon l'une des revendications 6 ou 7, **caractérisé en ce que** les perçages (50) des ailes (48) du boîtier (36) sont décalés longitudinalement l'un par rapport à l'autre.

9. Ensemble selon l'une quelconque des revendications 4 à 7, **caractérisé en ce que** les sections transversales des longerons inférieurs (22) et du corps central (46) du boîtier (36) sont rectangulaires.
